# EUROPEAN PATENT SPECIFICATION

(11) **EP 2 122 369 B1**
(45) Date of publication and mention of the grant of the patent: **03.08.2011**
(21) Application number: 07859497.5
(22) Date of filing: 21.12.2007
(51) Int. Cl.: G01N 35/00

(54) **AUTOMATIC SAMPLING APPARATUS FOR CHEMICAL ANALYSES WITH A GUIDE DEVICE FOR THE SAMPLE COLLECTING/INJECTING**
AUTOMATISCHES PROBENENTNAHMEGERÄT FÜR CHEMISCHE ANALYSEN MIT FÜHRUNGSVORRICHTUNG ZUR PROBENENTNAHME/-INJEKTION
APPAREIL D'ÉCHANTILLONNAGE AUTOMATIQUE POUR ANALYSES CHIMIQUES À DISPOSITIF GUIDE DE RECUEIL/INJECTION D'ÉCHANTILLONS

(30) Priority: 22.12.2006 IT FI20060336
(43) Date of publication of application: 25.11.2009
(73) Proprietor: DEGLI ESPOSTI, Filippo, 59100 Prato (IT); DUGHERI, Vittorio, 51036 Larciano (IT)
(72) Inventor: DEGLI ESPOSTI, Filippo, 59100 Prato (IT); DUGHERI, Vittorio, 51036 Larciano (IT)
(74) Representative: Bardini, Marco Luigi
(86) International application number: PCT/IB2007/055277
(87) International publication number: WO 2008/078304

(56) References cited:
- EP-A- 0 972 744
- EP-A- 0 994 355
- WO-A-2007/032039
- US-A- 3 743 123

## Description

### Field of the Invention

The present invention relates generally to the field of instrumentation for chemical analyses conducted especially using the gas chromatography technique. More precisely, the invention relates to automatic sampling appliances and in particular to a device for guiding the sample collecting/injecting instrument installed in said appliances

### State of the Art

It is known that an automatic sampler is an appliance equipped with a robot-controlled arm that enables the automation of the procedure for the extraction (collection) of an analyte and its injection into a gas chromatograph, operations that can be handled using various instruments - also depending on the type of analyses and the type of appliance involved - such as syringes, solid-phase micro-extraction (SPME) fibres, dilution tips and other such instruments that need to be guided during their insertion in vials, injectors, washing stations, or containers.

The autosampler arm ends with a head for supporting the instrument through which the analysis is performed. In the case of analyses conducted using SPME fibres, for instance, the head on the arm is fitted with a container (or holder) suitable for inserting the SPME probe, consisting of a coated fused silica fibre with one end fixed to a connector and slidingly inserted in a protective needle to enable the exposure of the opposite end. The connector is removably attached to a piston on the holder, that slides to make a more or less extensive portion of the fibre extend from or withdraw inside the needle.

In conventional autosamplers, the operator has to take action every time the instrument used to collect and/or inject samples, and/or similar operations, needs to be replaced. In particular, when SPME probes are used, the probe must be attached to and removed from the holder by hand. The PCT patent application No. WO 2007/032039 in the name of the same applicants, describes an automatic sampling apparatus using SPME wherein the SPME fibres are also changed automatically. An apparatus based on said patent application is illustrated in Figure 1.

The head on the arm of an autosampler has a lower part comprising a device for guiding the displacement of the needle on the instrument that generally comprises one or more axially aligned, ring-shaped elements that prevent the needle from bending when it is inserted under pressure in a vial, or in the injector of the gas chromatograph. In the above-mentioned patent application relating to an autosampler using SPME probes, the ring-shaped elements serving as a needle guide have a slit in the front through which the needle is passed during the probe handling stages.

This configuration of the guide device may cause fibre damage, however, when the fibre is bent for various reasons, due for instance to an imprecise assembly of the fibre adapters, in which case the fibre is no longer aligned with the hole of the injector on the instrument when the analysis is performed, or if the fibre is inserted in a vial that has to be agitated, or if the sampling is done in the field, under unfavourable conditions. In such cases, in fact, because the axis of the needle is out of alignment with the centre of the guide, the needle may emerge from the open side, passing through the front slit and causing irreparable damage or the rupture of the probe. The same problem occurs when conventional needle guides are used with syringes fitted with thin needles, in which case it is more difficult for the needles to penetrate the perforable cover of the vials and injectors. Here again, the needle consequently tends to bend and may even extend from the side where the slit is formed.

### Object and Summary of the Invention

The object of the present invention is to provide a guide device for attaching to the head of the robot-controlled arm of autosamplers that enables the above-described functional drawbacks of known guide devices to be overcome.

### Brief description of the drawings

This object is achieved with a guide device for autosamplers according to the present invention, the essential features of which are set forth in claim 1. Further important features are specified in the dependent claims.

The characteristics and advantages of the guide device for autosamplers according to the present invention will be apparent from the following description of an embodiment, given here as a non-limiting example with reference to the attached drawings, wherein:
figure 1 is an overall perspective view of an autosampler appliance according to WO 2007/032039;
figure 2 is a perspective view of a workstation fitted with an SPME probe in the autosampler appliance according to the invention;
figure 3 is a side view of the guide device according to the invention in the stage in which it approaches to the workstation shown in figure 2;
figure 4 is a perspective view of the situation shown in figure 3;
figure 5 is an enlarged perspective view of the guide device according to the invention;
figure 6 is a partial cross-section of the guide device shown in figure 5;
figures 7, 8 and 9 show top plan views of three subsequent steps of the sequence for positioning the guide device on the workstation.

### Detailed description of the Invention

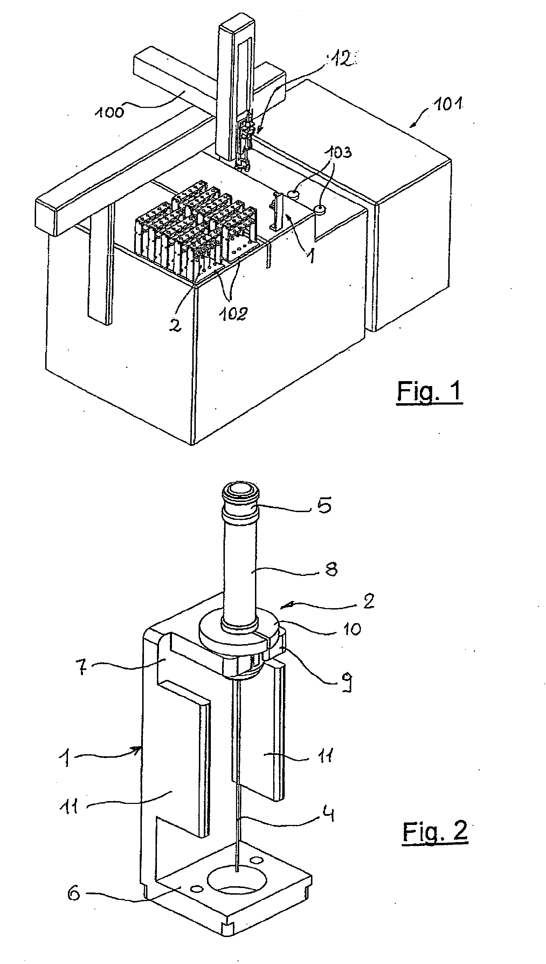

First of all, in the present description reference will be made to a structure of an autosampling apparatus such as that described in the cited PCT patent application No. WO 2007/032039, on the understanding that the present invention is also applicable to any other autosampling apparatus with similar functional requirements. The apparatus assembly is shown in figure 1 and comprises a robot-controlled autosampling arm 100 supported by a gas chromatograph 101, on which one or more plates 102 are placed to carry an orderly array of probes 2 containing SPME fibres. Alongside the plates 102 there is a probe transfer support 1, hereinafter generically referred to as a workstation, on which the autosampler arm 100 places the probes 2 before and after the injection step in the gas chromatograph through injection ports 103. The autosampler arm 100 ends with a head 12 carrying a holder (not shown) for an SPME probe.

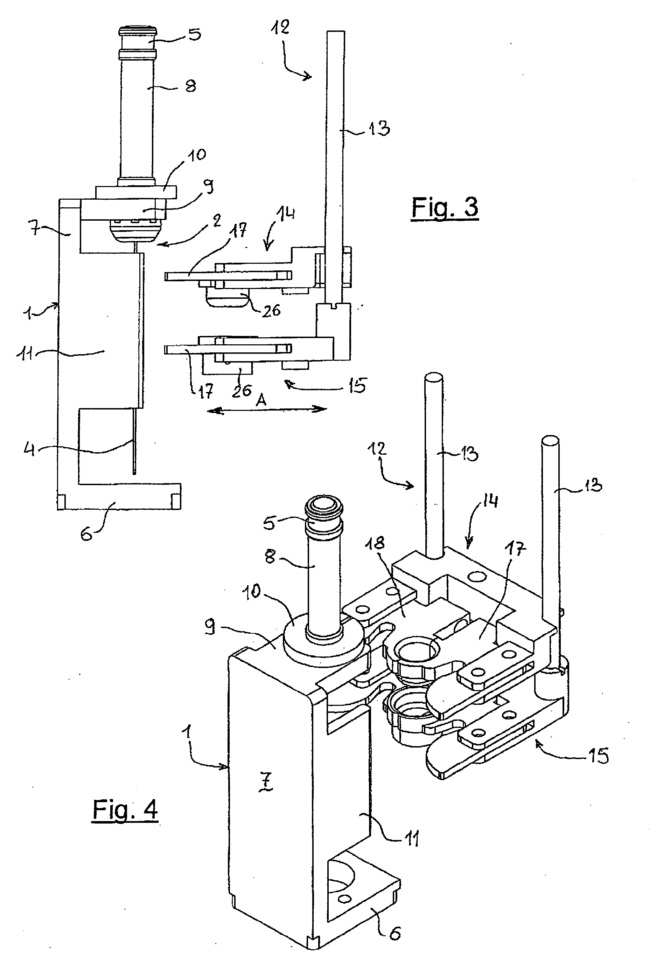

With reference to figures 2, 3 and 4, an SPME probe 2, placed on the workstation 1, consists of a silica fibre (not shown) slidingly housed in a rigid needle 4 and ending with a connector 5 for its connection to an actuator device provided in the holder, installed on the head 12 of the autosampler arm 100. The holder and actuator device are not described in further detail because they are of the known type and have already been described in the previously-mentioned patent application, which is incorporated herein by reference. The head 12 moves towards or away from the workstation 1 in the direction indicated by A in figure 3.

The workstation 1 consists of a base 6 and an upright plate 7, rising from said base, with a frontally-extending supporting element 9 on which a flange 10 fixed to the needle 4 is rested. Between the flange 10 and the connector 5 there is a steel tubular guard 8 that prevents any oscillation of the fibre while it is transported, thus making the whole system stronger and reliable. Two parallel flat wings or arms 11 extend frontally from the sides of the upright 7, below the support 9.

The device for guiding the needle 4 is installed underneath the head 12 of the robot-controlled arm and comprises a pair of parallel stems 13 extending from the head 12 with a pair of spaced apart guide members 14 and 15, positioned one over the other, and attached to said stems by means of screws (not shown).

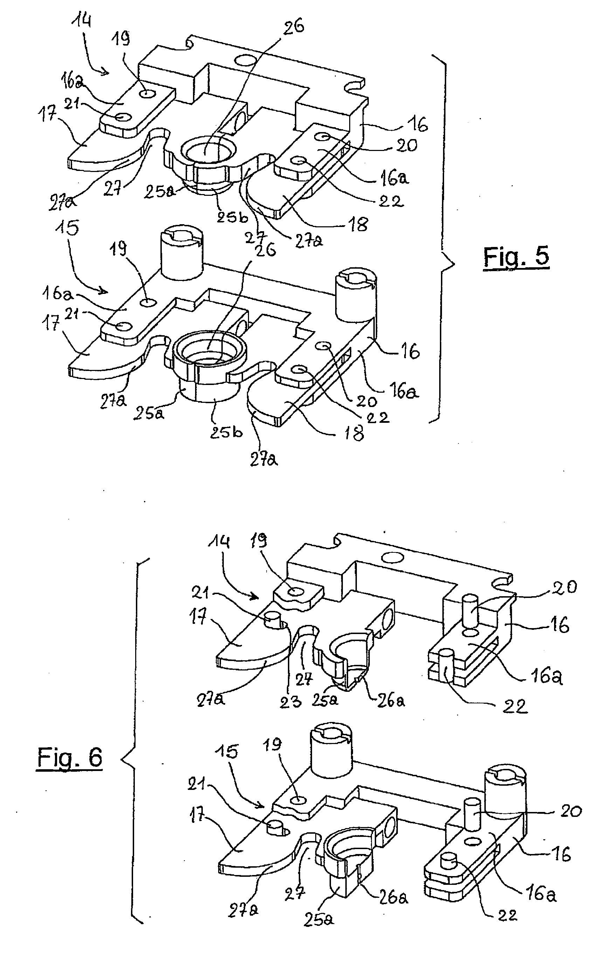

Figures 5 and 6 show the structure of the guide members 14 and 15 in more detail.

The guide member 14 (the description of which applies equally to the identical guide member 15) comprises a base 16 attached orthogonally to the stems 13, supporting a pair of identical coplanar jaws 17 and 18. The base 16 comprises two substantially U-shaped, parallel and spaced apart appendages 16a, that extend orthogonally to the stems 13. The jaws 17 and 18 engage in the U-shaped appendages 16a and are connected to the latter through respective spindles 19 and 20, parallel to the stems 13, and respective locking pins 21 and 22 integrally attached to the U-shaped appendages 16a and engaging in slots provided on the jaws 17 and 18 (only one slot is shown in figure 6 and indicated by the numeral 23). The length of the slots 23 determines the amplitude of the angular displacement of the two jaws 17 and 18 around the spindles 19 and 20, between a first coupling position, in which the two jaws are juxtaposed, and a second open position, in which they are apart, at an angle corresponding to the maximum angular displacement permitted by the length of the two slots 23.

Respective semitubular appendages 25a, 25b, parallel to the spindles 19 and 20, extend from the two jaws 17 and 18 and, in a first position, they are coupled to form an open-ended tubular seat 26, that is closed in the coupling position and progressively opens with the passage from the first to the second position. The end of the tubular seats 26 facing towards the base 6 of the workstation 1 has a narrow cross-section 26a, visible in figure 6, of a diameter sufficient to contain the needle 4 and to guide it precisely during its axial sliding displacement.

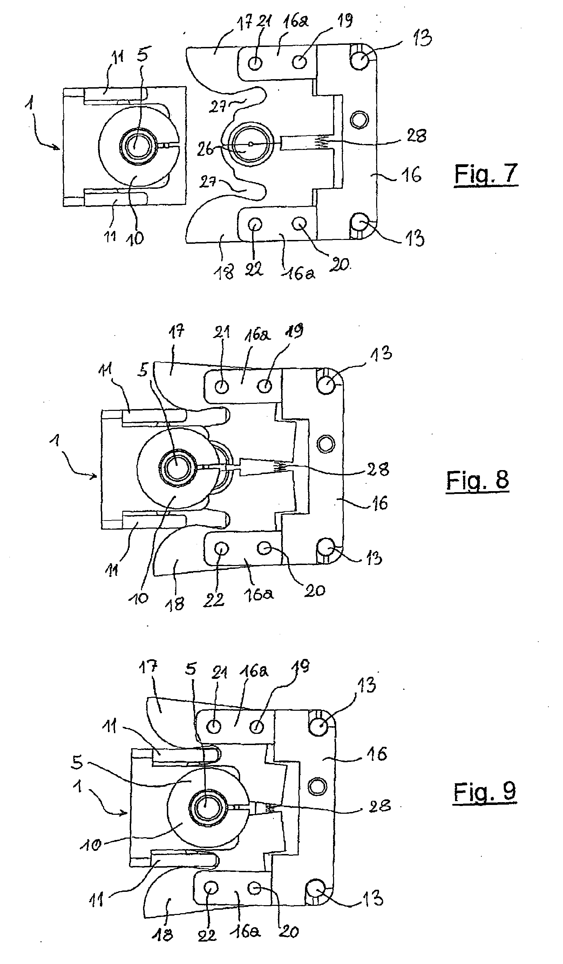

Two recesses 27 are provided on the two jaws 17 and 18, lying symmetrically with respect to the coupling plane of the jaws so that, when the two jaws are in the closed position, the recesses have their respective openings closer to one another than the distance between the arms 11 of the workstation 1, but their inlet sections have a funnel-shaped profile 27a that enables the arms 11 to engage in the recesses 27 as the guide device is juxtaposed with the workstation 1. In fact, as shown in sequence in figures 7, 8 and 9, as the head of the autosampler arm (to which the guide device is integrally attached) moves towards the workstation 1, the free ends of the arms 11 come into contact with the funnel-shaped opening 27a of the recesses 27. As the head moves closer, the ends of the arms 11 slide along the funnel-shaped sides 27a and thereby induce the rotation of the jaws 27 around their respective spindles 19 and 20 until they have spread as wide open as possible, when the arms 11 engage completely in the recesses 27, as shown in figure 9.

In particular, the recesses 27 have sides sloping in the forward feed direction at an angle substantially equal to the maximum angular displacement of the jaws 17 and 18 so that, when the arms 11 engage completely in the recesses 27, the latter are substantially aligned with the arms 11 and parallel to one another.
1. The passage from the condition shown in figure 7 (the first position of the jaws 17 and 18) to the condition shown in figure 9 (the second position of the jaws 17 and 18) is elastically opposed by a spring 28, the ends of which are engaged in opposite seats 29 (only one of which is shown in figure 6) formed on the rear end - with respect to the forward feed direction - of the jaws 17 and 18, i.e. on the opposite side of the recesses 27 from the spindles 19 and 20. Due to the effect of the spring 28, the jaws 17 and 18 consequently tend to remain coupled, and to return to said coupled position as soon as the arms 11 disengage from the recesses 27.

Although the guide device in the above-described embodiment of the invention consists of two coaxial guide members 14 and 15 positioned one above the other, it should be understood that a single guide member suffices to achieve the effect of the invention, providing it is of sufficient length. The previously-described solution with two guide members is preferable, however, because it enables a better axial distribution of the bending stress in the needle.

It is also worth adding that the workstation 1 in the above-described embodiment of the invention is designed to work with SPME probes, but it may vary in shape so as to be able to contain other analytical instruments, such as syringes or any other instrument that needs to be contained and guided in subsequent procedures. The workstation must in any case be fitted with means for actuating the rotation of the two jaws 17 and 18, and particularly with the pair of arms 11 on which the longitudinal thrust needed to open the jaws comes to bear.

The shape of the open-ended tubular seat 26 may also vary, depending on the shape of the analytical instruments used and of the component (needle or other part) thereof that is in the need to be guided.

Variations and/or modifications may be brought to the guide device for autosamplers according to the invention without departing from the scope of the invention set forth in the following claims.

## Claims

1. An automatic sampling apparatus for instrumental chemical analyses, comprising at least one workstation (1) for holding an instrument for collecting/injecting the sample to analyse, and a robot-controlled arm (100) with a head (12) for holding the instrument and a device (14, 15) for guiding the instrument extending from said head, **characterised in that** said guide device comprises at least a pair of coplanar jaws (17, 18) that, in their coupling position, form an open-ended tubular seat (26) serving as a sliding guide for said instrument, said jaws being pivotally connected to a supporting element (13) integrally attached to said head (12) and comprising elastic means (28) for retaining the jaws in said coupling position, said workstation (1) comprising means (11) for actuating the rotation of said jaws, counteracting said elastic means during a displacement that brings said head towards said workstation in order to open said jaws, thereby opening said open-ended tubular seat so that said instrument can engage therein.

2. The apparatus according to claim 1, wherein corresponding semitubular appendages (25a, 25b) extend from said jaws and are designed to come together to form said open-ended tubular seat when said jaws are in said coupling position.

3. The apparatus according to claims 1 or 2, wherein said jaws are formed with respective symmetrical recesses (27) and said actuator means of said workstation (1) comprise two parallel arms (11) spaced apart with respect to each other and extending frontally from the workstation, the openings of said recesses being a lower distance apart than the distance between said arms, and with a funnel-shaped profile (27a) along which said arms (11) slide during the movement to bring said head (12) up against said workstation, thereby progressively making said jaws open wider.

4. The apparatus according to claim 3, wherein said recesses (27) have sides sloping symmetrically in the forward feed direction with an angle of inclination substantially equal to the maximum angular displacement of each jaw.

5. The apparatus according to any one of the previous claims, wherein said jaws are mounted on a base (16), fixed at right angles to a supporting element (13) extending from said head (12), and they are connected to said base by means of respective spindles (19, 20) and locking pins (21, 22) engaging in slots (23) formed thereon, so that said jaws rotate around said spindles, over an amplitude corresponding to the length of said slots, between said coupling position and said open position.

6. The apparatus according to any one of the previous claims, wherein said elastic means comprise a spring (28) placed between said jaws (17, 18) on the side of said recesses (27) opposite said spindles (19, 20).

7. The apparatus according to any one of the previous claims, wherein said open-ended tubular seat (26) includes a portion with a narrower cross-section (26a).

8. The apparatus according to any one of the previous claims, wherein said guide device comprises two pairs of parallel, coplanar jaws, placed one above the other and spaced apart to each other.

9. The apparatus according to any one of the previous claims, wherein said arms are formed by two flat plates.

## Patentansprüche

1. Automatisches Probenentnahmegerät für instrumentelle chemische Analysen, enthaltend wenigstens eine Arbeitsstation (1) zum Halten eines Instruments zum Aufnehmen/Injizieren der Probe, die zu analysieren ist, und einen robotergesteuerten Arm (100) mit einem Kopf (12) zum Halten des Instruments und einer Vorrichtung (14, 15) zum Führen des Instruments, die sich von dem Kopf aus erstreckt, **dadurch gekennzeichnet, dass** die Führungsvorrichtung wenigstens ein Paar von koplanaren Backen (17, 18) enthält, die in ihrer Kopplungsposition einen rohrartigen Sitz (26) mit offenem Ende bilden, der als eine Verschiebeführung für das Instrument dient, wobei die Backen drehbar mit einem Halteelement (13) verbunden sind, das integral an dem Kopf (12) angebracht ist und elastische Einrichtungen (28) zum Zurückhalten der Backen in der Kopplungsposition enthält, wobei die Arbeitsstation (1) zur Betätigung der Drehung der Backen Einrichtungen (11) enthält, die den elastischen Einrichtungen während einer Verstellung entgegen wirken, die den Kopf zu der Arbeitsstation bringt, um die Backen zu öffnen, wodurch der rohrartige Sitz mit offenem Ende geöffnet wird, so dass das Instrument darin in Eingriff sein kann.

2. Gerät nach Anspruch 1, wobei sich entsprechende semitubulare Fortsätze (25a, 25b) von den Backen aus erstrecken und gestaltet sind, um zusammen zu kommen, um den rohrartigen Sitz mit offenem Ende zu bilden, wenn die Backen in der Kopplungsposition sind.

3. Gerät nach Anspruch 1 oder 2, wobei die Backen mit entsprechenden symmetrischen Ausnehmungen (27) ausgebildet sind und die Betätigungseinrichtungen der Arbeitsstation (1) zwei parallele Arme (11) enthalten, die bezüglich einander beabstandet sind und sich frontal von der Arbeitsstation aus erstrecken, wobei die Öffnungen der Ausnehmungen einen geringeren Abstand auseinander sind, als der Abstand zwischen den Armen, und haben ein trichterförmiges Profil (27a), längs welchem sich die Arme (11) während der Bewegung verschieben, um den Kopf (12) nach oben gegen die Arbeitsstation zu bringen, wodurch die Backen zunehmend zum weiteren Öffnen veranlasst werden.

4. Gerät nach Anspruch 3, wobei die Ausnehmungen (27) Seiten haben, die sich symmetrisch in der Vorwärtszufuhrrichtung mit einem Neigungswinkel im Wesentlichen gleich der maximalen winkelmäßigen Verstellung jeder Backe neigen.

5. Gerät nach einem der vorhergehenden Ansprüche, wobei die Backen an einer Basis (16) montiert sind, die unter rechten Winkeln an einem Halteelement (13) befestigt ist, das sich von dem Kopf (12) aus erstreckt, und sie mit der Basis mittels entsprechenden Zapfen (19, 20) und Verriegelungsstiften (21, 22) verbunden sind, die in Schlitze (23) eingreifen, die daran ausgebildet sind, so dass die Backen um die Zapfen über eine Amplitude entsprechend der Länge der Schlitze zwischen der Kopplungsposition und der Offenposition rotieren.

6. Vorrichtung nach einem der vorhergehenden Ansprüche, wobei die elastischen Einrichtungen eine Feder (28) enthalten, die zwischen den Backen (17, 18) an der Seite der Ausnehmungen (27) entgegengesetzt zu den Zapfen (19, 20) angeordnet ist.

7. Gerät nach einem der vorhergehenden Ansprüche, wobei der rohrartige Sitz (26) mit offenem Ende einen Teil mit einem engeren Querschnitt (26a) enthält.

8. Gerät nach einem der vorhergehenden Ansprüche, wobei die Führungsvorrichtung zwei Paare von parallelen koplanaren Backen enthält, die eines über dem anderen und voneinander beabstandet angeordnet sind.

9. Gerät nach einem der vorhergehenden Ansprüche, wobei die Arme durch zwei flache Platten gebildet sind.

## Revendications

1. Un appareil d'échantillonnage automatique pour analyses chimiques instrumentales, comportant au moins un poste de travail (1) pour supporter un instrument pour recueillir/injecter l'échantillon à analyser, et un bras commandé par robot (100) avec une tête (12) pour maintenir l'instrument et un dispositif (14, 15) pour guider l'instrument s'étendant à partir de ladite tête, **caractérisé en ce que** ledit dispositif de guidage comporte au moins une paire de mâchoires coplanaires (17, 18) qui, dans leur position d'accouplement, forment un siège tubulaire (26) à extrémité ouverte utilisé comme guide de glissement pour ledit instrument, lesdites mâchoires étant montées pivotantes sur un élément support (13) fixé solidairement à ladite tête (12) et comprenant des moyens élastiques (28) pour retenir les mâchoires dans ladite position d'accouplement, ledit poste de travail (1) comprenant des moyens (11) pour actionner la rotation des dites mâchoires, agissant à l'encontre des dits moyens élastiques pendant un déplacement qui amène ladite tête vers ledit poste de travail afin d'ouvrir lesdites mâchoires, ouvrant de ce fait ledit siège tubulaire à extrémité ouverte de façon que ledit instrument puisse s'y engager.

2. L'appareil selon la revendication 1, où des parties en saillie semi-tubulaires correspondantes (25a, 25b) s'étendent à partir des dites mâchoires et sont agencées pour s'assembler pour former ledit siège tubulaire (26) à extrémité ouverte quand lesdites mâchoires sont dans leur dite position d'accouplement.

3. L'appareil selon l'une des revendications 1 et 2, où lesdites mâchoires sont formées de renfoncements symétriques respectifs (27) et où lesdits moyens d'actionnement du dit poste de travail (1) comportent deux bras parallèles (11) espacés l'un de l'autre et s'étendant vers l'avant à partir du poste de travail, les ouvertures des dits renfoncements étant à une distance l'un de l'autre inférieure à la distance séparant lesdits bras, et avec un profil en forme d'entonnoir (27a) le long duquel lesdits bras (11) glissent pendant le mouvement pour amener ladite tête (12) contre ledit poste de travail, de façon que lesdites mâchoires s'ouvrent progressivement plus largement.

4. L'appareil selon la revendication 3, où lesdits renfoncements (27) ont des côtés se renversant symétriquement dans la direction avant d'al imentation selon un angle d'inclinaison sensiblement égal au déplacement angulaire maximum de chaque mâchoire.

5. L'appareil selon l'une quelconque des revendications précédentes, où lesdites mâchoires sont montées sur une embase (16), fixée à ange droit sur un élément support (13) s'étendant à partir de ladite tête (12), et sont reliées à ladite embase au moyen de pivots respectifs (19, 20) et de goupilles de verrouillage (21, 22) s'engageant dans des fentes (23) formées sur elles, de façon que lesdites mâchoires tournent autour des dits pivots, avec une amplitude correspondant à la longueur des dites fentes, entre ladite position d'accouplement et ladite position d'ouverture.

6. L'appareil selon l'une quelconque des revendications précédentes, où lesdits moyens élastiques comprennent un ressort (28) disposé entre lesdites mâchoires (17, 18) sur le côté des dits renfoncements (27) opposé aux dits pivots (19, 20).

7. L'appareil selon l'une quelconque des revendications précédentes, où ledit siège tubulaire à extrémité ouverte (26) inclut une partie avec une section transversale plus étroite (26a).

8. L'appareil selon l'une quelconque des revendications précédentes, où ledit dispositif de guidage comporte deux paires de mâchoires parallèles et coplanaires, placées l'une au-dessus de l'autre et séparées l'une de l'autre.

9. L'appareil selon l'une quelconque des revendications précédentes, où lesdits bras sont formés de deux plaques planes.
